Europäisches Patentamt

European Patent Office

Office européen des brevets

(19)

(11) **EP 1 067 100 B1**

(12) **FASCICULE DE BREVET EUROPEEN**

(45) Date de publication et mention
de la délivrance du brevet:
**26.05.2004 Bulletin 2004/22**

(51) Int Cl.⁷: **C03C 8/22**, C03C 17/04,
C03C 8/18

(21) Numéro de dépôt: **00401929.5**

(22) Date de dépôt: **05.07.2000**

(54) **Composition d'email, procédé de fabrication et produits émaillés obtenus**

Emailzusammensetzung, Verfahren zur Herstellung und erhaltene emaillierte Gegenstände

Enamel composition, method of production and obtained enameled products

(84) Etats contractants désignés:
**AT BE CH CY DE DK ES FI FR GB GR IE IT LI LU
MC NL PT SE**

(30) Priorité: **08.07.1999 FR 9908833**

(43) Date de publication de la demande:
**10.01.2001 Bulletin 2001/02**

(73) Titulaire: **SAINT-GOBAIN GLASS FRANCE
92400 Courbevoie (FR)**

(72) Inventeurs:
• **Beyrle, André
60170 Tracy le Val (FR)**

• **Dages, Daniel
78130 Les Mureaux (FR)**

(74) Mandataire: **Muller, René
SAINT-GOBAIN RECHERCHE
39, quai Lucien Lefranc
93300 Aubervilliers (FR)**

(56) Documents cités:
**WO-A-98/25864**          **FR-A- 2 495 190**
**US-A- 5 439 852**

## Description

La présente invention concerne le dépôt d'émail sur un substrat en verre, notamment sur un vitrage. En particulier, elle concerne une nouvelle composition d'émail ainsi que son procédé d'obtention un procédé pour la fabrication d'une couche émaillée sur un substrat en verre, et les produits émaillés obtenus, en particulier les vitrages émaillés.

Les émaux sont bien connus dans l'état de la technique et sont utilisés, notamment, pour revêtir des substrats en verre, tels que des vitrages, dans l'industrie automobile ou l'industrie du bâtiment. Ils permettent, entre autres, de former des inscriptions ou des couches décoratives, des couches conductrices, des couches de protection, notamment des couches de protection contre les rayonnements ultraviolets pour les couches adhésives ou cordons adhésifs destinés au montage des vitrages dans les baies de carrosserie, des masques, notamment des masques pour cacher des bandes collectrices de réseaux chauffants ou pour cacher les cordons adhésifs précédemment mentionnés, etc.

Les émaux utilisés pour revêtir des substrats en verre sont généralement formés (avant application sur le substrat et cuisson) d'une poudre comprenant une fritte de verre (devant former la matrice vitreuse) et des pigments (en tant que colorants notamment, ces pigments pouvant également faire partie de la fritte), la fritte et les pigments étant à base d'oxydes métalliques, et d'un médium ou «véhicule» permettant l'application et l'adhésion temporaire de l'émail sur un substrat. Le médium, choisi selon la destination de l'émail, doit assurer une bonne mise en suspension des particules des frittes et pigments utilisés et doit se consumer au plus tard lors de la cuisson de l'émail. Ce médium peut comporter des solvants, des diluants, des huiles, des résines, etc.

Un problème des substrats en verre émaillés existants est la difficulté à recycler de tels produits, en particulier dans la fabrication de substrats en verre sous forme de feuilles (vitrages). Les vitrages devant satisfaire à de nombreuses exigences en matière de coloration, de transmission lumineuse et/ou énergétique etc., il importe en effet que les déchets de verre réintroduits sous forme broyée (calcin) dans les fours de fusion utilisés pour la fabrication des vitrages, ne perturbent pas les compositions de verre déjà présentes habituellement et ne donnent pas des produits ne satisfaisant pas aux exigences requises. Si du calcin de verre non émaillé peut ainsi être réintroduit dans un four de fabrication de verre par flottage, à des taux généralement de l'ordre de 20-30 % en poids de la charge du four, le calcin de verre émaillé, en revanche, entraîne généralement l'apparition de colorations résiduelles indésirables ou d'îlots résiduels non fondus dans les feuilles de verre formées. Par conséquent, le taux de calcin de verre émaillé que l'on peut réintroduire dans ces fours n'excède pas généralement 2 à 3 % en poids de la charge des fours (l'émail constituant habituellement de 0,1 à 0,5 % en poids de ce calcin de verre).

Il est déjà connu (dans le document WO 98/25864) une composition d'émail améliorée et un procédé d'émaillage permettant d'obtenir des substrats en verre émaillés améliorés, en particulier des substrats émaillés pouvant plus facilement être recyclés (notamment dans la fabrication des vitrages) que les substrats émaillés existants, la composition comprenant comme pigments un ou des composés du manganèse et présentant une température de cuisson (appelée également température de fusion) inférieure à 750°C. De préférence, dans les applications automobiles, la composition est choisie de façon à obtenir un émail noir présentant les coordonnées colorimétriques suivantes, en valeurs absolues :

L* ≤ 5 ; |a*| ≤ 2 et |b*| ≤ 2 (et, de préférence, |a*| ≤ 1 et |b*| ≤ 1).

C'est le cas généralement des compositions décrites dans le document précédent et comprenant essentiellement $Bi_2O_3$ comme oxyde intermédiaire. Elles sont obtenues soit en ajoutant les composés du manganèse sous forme de poudre à une poudre de fritte de verre incluant $Bi_2O_3$, soit par un procédé appelé « procédé direct » en réalisant la fusion d'un mélange de matières premières appropriées (incluant les composés du manganèse) pour obtenir l'ensemble fritte/pigments souhaité.

En revanche, la coloration noire prisée dans les applications automobiles n'est pas obtenue de façon systématique avec d'autres types de compositions recyclables. En particulier, les essais effectués en remplaçant en tout ou en partie $Bi_2O_3$ par un oxyde plus économique tel que l'oxyde de zinc, n'ont pas permis d'obtenir la coloration noire recherchée, que l'on remplace $Bi_2O_3$ par un oxyde plus économique dans la poudre de fritte de verre avant ajout des composés du manganèse dans le premier procédé décrit au paragraphe précédent, ou que l'on remplace la ou les matières premières permettant d'obtenir $Bi_2O_3$ par une ou des matières premières permettant d'obtenir un oxyde plus économique dans le mélange de matières premières dans le procédé direct décrit au paragraphe précédent.

La présente invention a donc cherché à mettre au point des compositions d'émail noir recyclables plus économiques que les compositions précédentes à base de bismuth.

La composition d'émail obtenue selon l'invention est ainsi une composition d'émail noir (c'est à dire d'émail présentant une couleur noire après cuisson), recyclable, comprenant au moins du zinc.

Jusqu'à présent, de telles compositions n'étaient pas concevables pour les problèmes de coloration précédemment évoqués ou pour des problèmes de recyclage (des compositions plus économiques existant mais n'étant pas recyclables). La présente invention a réussi à mettre au point de telles compositions en concevant un procédé particulier d'obtention d'un émail, ce procédé comprenant les étapes suivantes : on réalise la fusion, à des températures supérieures à 900°C, de matières premières vitrifiables comprenant au moins du bismuth, du silicium, du bore et du manganèse, puis on ajoute une fritte de verre comprenant au moins du zinc au mélange obtenu après cette fusion directe.

Les matières premières utilisées dans le procédé selon l'invention peuvent être naturelles (par exemple sable, colémanite...) ou synthétiques (par exemple $Bi_2O_3$...). Le bismuth, le silicium, le bore et le manganèse apportés par les matières premières utilisées se présentent généralement sous forme de sels (nitrate, carbonate...) et/ou d'oxydes. Les matières premières vitrifiables utilisées dans le procédé de l'invention permettent d'obtenir, après fusion, un mélange (ou fritte) à base de bismuth, silicium, bore (présents essentiellement et exprimés par la suite dans les compositions sous forme respectivement des oxydes suivants : $Bi_2O_3$, $SiO_2$, $B_2O_3$; de même, on exprimera par la suite, dans les compositions, chaque autre composé sous sa forme communément présente, analysée et exprimée dans ces compositions ou frittes d'émail), ce mélange comprenant également, comme pigment(s), au moins un composé du manganèse.

De préférence, le ou les composés du manganèse présents dans le mélange mentionné précédemment (ci-après dénommé simplement « le mélange » ou « la première composition ») constituent les principaux pigments du mélange, ce mélange pouvant éventuellement comprendre un ou plusieurs autres pigments mais à des taux faibles (restant en particulier inférieurs, pour chaque autre pigment éventuel, au taux de composé(s) du manganèse). Avantageusement, le ou les composés du manganèse représentent au moins 50 % en poids des pigments présents, de préférence au moins 75 % en poids des pigments présents et de façon particulièrement préférée sont les seuls pigments présents dans le mélange. En particulier et afin d'obtenir une composition selon l'invention présentant une bonne aptitude au recyclage, ce mélange est avantageusemert dénué d'oxydes de chrome, d'oxydes de cuivre, d'oxydes de cobalt, d'oxydes de nickel et est également dénué d'autres composés à base de chrome, de cuivre, de cobalt, de nickel tels que des chromates de cuivre, des chromates de cobalt... De préférence, il est également dénué d'autres oxydes colorants tels que des oxydes de fer. Le taux de pigment(s) (avantageusement de composé(s) du manganèse) dans le mélange est généralement compris entre 20 et 50 % en poids du mélange.

Le ou les composés du manganèse sont généralement apportés sous forme de sel(s) de manganèse et/ou d'oxyde(s) de manganèse (par exemple $MnO_2$ et/ou $Mn_2O_3$ et/ou $Mn_3O_4$ et/ou $MnO$), et de préférence sont apportés sous forme de carbonate(s) de manganèse et/ou de $MnO_2$.

Dans la plupart des cas, les matières premières utilisées dans le procédé selon l'invention comprennent, outre les composés déjà cités, un ou des alcalins (par exemple du carbonate de sodium et/ou du nitrate de sodium) et de l'alumine. De préférence, les matières premières utilisées sont choisies de façon à obtenir après fusion le mélange suivant, les proportions étant exprimées en pourcentages pondéraux :

| | |
|---|---|
| $Bi_2O_3$ | 28 - 52 % |
| $SiO_2$ | 8 - 32 % |
| $B_2O_3$ | 1 - 10 % |
| $Al_2O_3$ | 0.1 - 4 % |
| Oxydes alcalins | 0.2 - 6 % |
| (le plus souvent $Na_2O$ et/ou $K_2O$) | |
| $MnO_2$ | 20 - 50 % |

La fusion des matières premières dans le procédé selon l'invention est effectuée de préférence à des températures supérieures à 1050°C (voire supérieure à 1100°C), l'observation de cette condition permettant d'obtenir directement la coloration noire recherchée lors de la cuisson ultérieure de l'émail, sans la nécessité d'un traitement thermique supplémentaire du mélange tel qu'un recuit. Un tel traitement thermique supplémentaire du mélange peut en revanche être souhaitable dans le cas où la fusion directe est opérée à des températures inférieures à 1050°C (c'est-à-dire principalement comprises entre 900°C et 1050°C dans le procédé selon l'invention), le recuit s'opérant par exemple à des températures comprises entre 480 et 550°C (voire 650°C) environ, avant ajout de la fritte comprenant au moins du zinc, et favorisant, si nécessaire, dans ce cas, l'apparition de la coloration noire. La température de fusion des matières premières dans le procédé selon l'invention est donc choisie supérieure à 900°C, de préférence supérieure à 1050°C, et n'excède pas 1300°C en règle générale.

Le mélange obtenu après la fusion des matières premières est ensuite généralement broyé sous forme de poudre, l'ajout de la fritte de verre comprenant au moins du zinc (appelée ci-après fritte de verre au zinc) au mélange se faisant préférentiellement après ce broyage (la fritte au zinc étant alors également préférentiellement apportée sous forme de poudre). Dans une variante, la fritte au zinc (obtenue par une fusion directe ou déjà sous forme de poudre) peut être ajoutée au mélange avant broyage de l'ensemble fritte au zinc/ mélange.

De préférence, le broyage réalisé est un broyage fin de façon à ce qu'au moins 90 % en poids des particules formant la poudre présentent un diamètre inférieur à 40 µm, de préférence inférieur à 20 µm et, de façon particulièrement préférée, inférieur à 10 µm (ce broyage fin permettant d'obtenir de meilleurs résultats en terme d'opacité de l'émail). Le cas échéant, la poudre finale (comprenant le mélange et la fritte au zinc broyés) est ensuite empâtée dans un médium, en vue du dépôt sur une surface à revêtir et de la cuisson définitive de l'émail. Dans une variante, la fritte au zinc est déjà empâtée dans un médium lors de son association avec le mélange.

Dans le procédé selon l'invention, on opère ainsi l'association de deux compositions distinctes particulières (une première composition consistant en le mélange et une seconde composition comprenant au moins la fritte de verre au zinc) à un moment bien particulier du procédé, cette association de compositions particulières, effectuée dans de telles conditions, permettant d'obtenir une composition particulièrement économique (en particulier par rapport à une composition comprenant uniquement $Bi_2O_3$ comme oxyde intermédiaire) tout en restant une composition recyclable, et permettant d'obtenir la coloration noire reproductible recherchée dans les applications automobiles, une telle coloration noire n'étant pas obtenue lorsque l'association est effectuée différemment. De préférence, la composition ajoutée au mélange (cette composition étant appelée ci-avant seconde composition) consiste essentiellement en la fritte de verre au zinc, dans un médium ou non, et est notamment dénuée de pigments, l'ajout de pigments à l'association mélange/fritte au zinc pouvant être préjudiciable à l'obtention de la couleur noire ou à l'aptitude au recyclage de l'émail obtenu. La composition ajoutée au mélange est en particulier dénuée de composés du manganèse et, comme pour le mélange, est dénuée d'oxydes de chrome, d'oxydes de cuivre, d'oxydes de cobalt, d'oxydes de nickel et de tout autre composé à base de chrome, cuivre, cobalt, nickel (et éventuellement fer).

De préférence, la fritte de verre au zinc est ajoutée au mélange de façon à représenter de l'ordre de 20 à 55 % en poids de l'association mélange/fritte de verre au zinc. Généralement, la fritte de verre au zinc comprend, outre le zinc (présent comme oxyde intermédiaire et exprimé sous forme de ZnO), d'autres oxydes tels que $B_2O_3$ ou $SiO_2$.

Dans un mode de réalisation avantageux de la présente invention, la fritte de verre au zinc présente par exemple la composition suivante, exprimée en pourcentages pondéraux :

| | |
|---|---|
| ZnO | 18 - 30 % |
| $SiO_2$ | 16 - 50 % |
| $B_2O_3$ | 10 - 25 % |
| $Al_2O_3$ | 1 - 4 % |
| F | 0 - 5 % |
| Oxydes alcalins | 6 - 15 % |
| (le plus souvent $Na_2O$ et/ou $K_2O$) | |
| $TiO_2$ | 0 - 8 % |

La composition d'émail ainsi obtenue dans le procédé selon l'invention est une composition d'émail noir, recyclable, au zinc (ou comprenant au moins du zinc), comme définie selon l'invention. La composition selon l'invention peut également être définie comme une composition d'émail dénuée de composés du chrome, cuivre, nickel, cobalt (et éventuellement fer), cette composition comprenant du zinc et étant apte à donner une coloration noire ($L^* \leq 5$ ; $|a^*| \leq 2$ et $|b^*| \leq 2$) après cuisson. La composition selon l'invention peut en particulier et avantageusement être obtenue par le procédé selon l'invention.

La composition d'émail selon l'invention comprend généralement un mélange d'oxydes (fritte), dont au moins ZnO. Par « composition d'émail » on entend, selon l'invention, la composition de l'émail considérée avant sa cuisson, l'émail après cuisson étant essentiellemert sous forme d'une matrice vitreuse colorée.

De manière générale, la composition d'émail selon l'invention comprend également d'autres oxydes, en particulier $Bi_2O_3$ et $MnO_2$, ainsi que des oxydes de silicium ($SiO_2$ jouant le rôle d'oxyde formateur), d'aluminium, de bore, et éventuellement d'autres oxydes tels que des oxydes de sodium, de lithium, de potassium, de calcium, de magnésium, de titane, etc. De préférence, la composition selon l'invention, obtenue en particulier selon le procédé de l'invention, présente la composition suivante, exprimée en pourcentages pondéraux :

| | |
|---|---|
| ZnO | 4 - 8 % |
| $Bi_2O_3$ | 16 - 35 % |
| $SiO_2$ | 20 - 27 % |
| $B_2O_3$ | 6 - 10 % |
| $Al_2O_3$ | 1 - 4 % |
| F | 0 - 0.5 % |
| $TiO_2$ | 0 - 1 % |
| Oxydes alcalins | 4 - 6 % |
| (le plus souvent $Na_2O$ et/ou $K_2O$) | |
| $MnO_2$ | 22 - 38 % |

De préférence (pour des raisons liées au recyc age notamment), la composition comprend moins de 1 % (avantageusement moins de 0,1 % et, de façon particulièrement avantageuse, moins de 0,05 %) en poids d'oxydes de plomb et, de façon particulièrement préférée, est dénuée d'oxydes de plomb. Elle est également préférentiellement dénuée d'autres éléments gênants tels que des oxydes de cadmium ainsi que des éléments chrome, cuivre, nickel, cobalt (et, si possible, fer) comme mentionné précédemment.

Dans un mode de réalisation avantageux de l'invention, la composition d'émail comprend, en outre, moins de 10% en poids et, de préférence, moins de 5 % en poids de particules d'argent et, de façon plus générale, comprend moins de 10 % de tout composé à base d'argent ou de toute particule conductrice.

Comme déjà évoqué précédemment, la composition d'émail selon l'invention peut comprendre un médium permettant la mise à viscosité désirée pour l'application sur le substrat et permettant la liaison avec le substrat. Ce médium peut être tout médium habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc. La proportion de médium dans la composition prête à être déposée est de préférence comprise entre 15 et 40 % en poids de ladite composition.

La composition d'émail selon l'invention présente également avantageusement une température de cuisson (ou température de fusion) inférieure à 700°C (par exemple de l'ordre de 550-650°C); dans le procédé selon l'invention, les matières premières et la fritte au zinc utilisées sont, en particulier, choisies de façon à obtenir préférentiellement une composition présentant une telle température de cuisson. Par « température de cuisson de la composition d'émail » on entend, selon l'invention, la température de cuisson de l'émail sous sa forme telle que déposée sur le substrat à revêtir. Elle correspond, dans le domaine des émaux, à la température minimale à laquelle on observe un frittage « suffisant » de la composition, ce frittage « suffisant » se traduisant notamment par une disparition de l'effet de capillarité de l'émail au cours du frittage. L'homme de l'art sait mesurer cette température de fusion par exemple en passant un stylo à encre (c'est-à-dire plus précisément un feutre) sur l'émail (après que celui-ci a été porté à une température de traitement puis refroidi) et en notant la température de traitement la plus basse pour laquelle la trace, laissée à travers l'émail refroidi par les solvants de l'encre lorsqu'ils sont absorbés par l'émail par capillarité, disparaît. Lors de la réalisation d'un substrat émaillé, la température choisie pour cuire l'émail déposé sur le substrat est alors préférentiellement choisie supérieure ou égale à cette température de cuisson.

Dans le procédé d'émaillage de substrats en verre, notamment de vitrages, utilisant la composition selon l'invention, la composition d'émail, après dépôt sur un substrat, est cuite, la cuisson s'opérant le cas échéant pendant le traitement thermique lié au bombage et/ou à la trempe des substrats, les températures de cuisson étant généralement de l'ordre de 550 à 700-750°C et la durée de cuisson n'excédant pas préférentiellement quelques minutes. De façon générale et de préférence, tout traitement thermique effectué sur la composition d'émail selon l'invention (ou sur l'association mélange/fritte au zinc obtenue dans le procédé selon l'invention) n'excède pas 700°C en température et n'excède pas quelques minutes ou dizaines de minutes (au maximum une heure), un traitement thermique plus poussé pouvant entraîner une dégradation de la coloration noire. Le respect de ces conditions n'est cependant pas pénalisant pour la mise en oeuvre de l'émail selon l'invention, cet émail pouvant avantageusement être mis en oeuvre à l'aide des dispositifs et dans les conditions de température et de pression habituellement utilisés pour la mise en oeuvre des émaux traditionnels dans les applications automobiles notamment.
Le dépôt de la composition d'émail sur un substrat peut se faire par sérigraphie, par pulvérisation, par enduction au rideau ou au rouleau, etc., le dépôt étant suivi généralement d'un séchage, par exemple par infrarouge, pour fixer temporairement l'émail par exemple par élimination des diluants du médium servant à l'application de l'émail sur le substrat. Dans le cas où plusieurs couches sont déposées sur le substrat, chaque couche est préférentiellement séchée avant le dépôt de la suivante, la cuisson s'opérant sur l'ensemble des couches.

Le bombage et la trempe éventuels des substrats en verre s'opèrent selon des méthodes connues. Notamment, le bombage peut s'effectuer par gravité (bombage notamment des substrats en verre par paires en vue de la réalisation de verres feuilletés) ou à l'aide de matrices et, lorsque les substrats sont bombés et trempés, la trempe peut s'opérer après le bombage des substrats émaillés, éventuellement au sein d'un même dispositif.

Dans le cas où des substrats en verre doivent être bombés simultanément en vue de réaliser des vitrages feuilletés, l'émail est déposé sur au moins un des substrats et les substrats sont assemblés puis bombés, les substrats en verre étant ensuite séparés pour insérer au moins un film intercalaire de matière différente, puis le vitrage feuilleté est obtenu par assemblage de l'ensemble à chaud et sous pression.

L'émail obtenu après cuisson présente une bonne opacité (la densité optique de l'émail étant généralement supérieure à 2,5). La densité optique (DO) est mesurée avec un densitomètre, par exemple appareil GRETAG® D200 (dans lequel on utilise un filtre de 550 nm) et est reliée au facteur de transmission lumineuse $T_L$ par la relation :

$$DO = \log 1/T_L$$

D'autre part, quelle que soit la couleur initiale (avant cuisson) de la composition d'émail selon l'invention, elle donne après cuisson un émail de couleur noire telle que recherchée pour les applications automobiles. De préférence, la composition d'émail selon l'invention est choisie de façon à donner après cuisson un émail de couleur noire présentant les coordonnées colorimétriques suivantes, en valeurs absolues:

$L^* \leq 5$ ; $|a^*| \leq 1$ (et, de préférence $|a^*| \leq 0.6$) et $|b^*| \leq 2$

(et, de préférence $|b^*| \leq 1$)

Les coordonnées colorimétriques L*, a* et b* ont été définies et proposées en 1931 par la Commission Internationale de l'Eclairage (CIE) et ont fait l'objet d'une recommandation officielle CIE en 1976 (Commission Internationale de l'Eclairage, Colorimetry - Recommandations Officielles - Publication CIE n° 15-2, Vienne, 1986). Les coordonnées colorimétriques ci-dessus indiquées sont mesurées en réflexion, sur spectrocolorimètre Minolta CM 2002, sous illuminant $D_{65}$ avec un angle d'observation 10° et en mode spéculaire exclu, pour l'émail se trouvant sur un substrat en verre non teinté présentant un facteur de transmission lumineuse de l'ordre de 90 % et une épaisseur de 4 mm.

Les substrats revêtus de l'émail selon l'invention présentent également, du fait notamment de l'utilisation du ou des composés du manganèse en tant que tout ou partie des pigments, une meilleure aptitude à être recyclés. Ainsi, lorsque les substrats revêtus de l'émail présentant la composition selon l'invention sont réintroduits, sous forme de calcin, dans un four de fusion de matières premières pour la production de feuilles de verre (à des températures généralement de l'ordre de 1350 à 1500°C), la coloration de l'émail disparaît généralement et ne vient pas interférer avec la coloration du verre résultant des matières premières utilisées. L'aptitude au recyclage de la composition selon l'invention est particulièrement bonne lorsque la composition comprend moins de 1 % ou est dénuée de composants gênants tels que ceux vus précédemment (tels que le plomb, le chrome, le cuivre, le cobalt, le nickel, le fer, le cadmium, l'argent et les particules conductrices).

La composition d'émail selon l'invention peut être utilisée pour revêtir divers substrats. Le substrat sur lequel la composition d'émail est déposée peut être un substrat en verre nu ou un substrat en verre déjà revêtu d'une ou plusieurs couches d'émail, de préférence d'une ou plusieurs couches d'émail selon l'invention. Ce substrat peut consister en une ou plusieurs feuilles de verre et peut être trempé de façon à présenter des propriétés de résistance mécanique et thermique améliorées. Le substrat revêtu d'émail selon l'invention comprend ainsi au moins une feuille de verre revêtue sur au moins une partie d'une de ses faces d'au moins une couche d'un émail présentant une composition selon l'invention. L'émail selon l'invention peut également être utilisé pour revêtir d'autres types de substrats.

Les substrats en verre, notamment les vitrages, revêtus d'émail selon l'invention présentent une aptitude améliorée au recyclage, ces substrats étant généralement recyclables, notamment sous forme de calcin dans des fours de fabrication de feuilles de verre, en particulier dans les fours, les plus répandus, de fabrication de feuilles de verre par flottage, ou « floats », à des taux pouvant aller jusqu'au moins 15 %, voire au moins 50 % en poids de la charge des fours (l'émail constituant généralement de 0.1 à 0.5 % en poids du calcin de verre). Les substrats revêtus d'émail selon l'invention présentent en outre des propriétés mécaniques suffisantes pour leur utilisation dans les applications automobiles.

D'autres avantages et caractéristiques de l'invention apparaîtront dans les exemples suivants illustrant la présente invention sans toutefois la limiter.

## EXEMPLE 1

On réalise la fusion à 1200°C environ d'un mélange de matières premières vitrifiables à base de carbonate de sodium, d'alumine, d'acide borique, de silice, d'oxyde de bismuth et de $MnO_2$ (ou de carbonate de manganèse), cette fusion étant suivie d'un broyage. Le mélange obtenu présente la composition suivante en poids : 7.7 % $B_2O_3$, 45.5 % $Bi_2O_3$, 12.2 % $SiO_2$, 1.8 % $Na_2O$, 2.8 % $Al_2O_3$ et 30 % $MnO_2$ ; on ajoute alors à 75 parts en poids du mélange obtenu 25 parts en poids de la composition suivante (pourcentages pondéraux) : $SiO_2$ 45.2 %, $Al_2O_3$ 2.6 %, $Na_2O$ 14.6 %, $B_2O_3$ 11.7 %, $TiO_2$ 4.6 %, F 0.8 % et ZnO 20.5 %.

Cet ensemble de compositions est ajouté à 27 parts d'un médium à base d'huile de pin comportant 3 % en poids de résine acrylique, afin d'obtenir une composition d'émail prête à être déposée sur un substrat. La composition est ensuite déposée sur une feuille de verre puis cuite à 620-640°C environ pendant quelques minutes. On obtient un substrat revêtu d'une couche d'émail noir présentant une densité optique de 2,5 et les coordonnées colorimétriques suivantes : L* = 2,7 ; a* = 0,4 et b* = 0,5 (ces coordonnées étant mesurées pour l'émail se trouvant sur un substrat en verre présentant un facteur de transmission lumineuse de l'ordre de 90 % et une épaisseur de 4 mm).

Le substrat est ensuite broyé et introduit dans un four de fusion de matières premières pour la réalisation de feuilles de verre par flottage, le substrat représentant 50 % en poids de la charge du four (et l'émail représentant 0.5% en poids de ce substrat). La température du four est de l'ordre de 1500°C. On obtient un verre dénué de toute coloration sans infondus en sortie de four.

De plus, par rapport à une même composition recyclable à base uniquement de bismuth comme oxyde intermédiaire, la composition obtenue dans cet exemple est beaucoup plus économique.

## EXEMPLE 2

On réalise la fusion à 1200°C environ d'un mélange de matières premières vitrifiables à base de carbonate de sodium, d'alumine, d'acide borique, de silice, d'oxyde de bismuth et de $MnO_2$ (ou de carbonate de manganèse), cette fusion étant suivie d'un broyage. Le mélange obtenu présente la composition suivante en poids : 7.7 % $B_2O_3$, 35.5 % $Bi_2O_3$, 12.2 % $SiO_2$, 1.8 % $Na_2O$, 2.8 % $Al_2O_3$ et 40 % $MnO_2$; on ajoute alors à 40 parts en poids du mélange obtenu 13 parts en poids de la composition suivante (pourcentages pondéraux) : $SiO_2$ 45.2 %, $Al_2O_3$ 2.6 %, $Na_2O$ 14.6 %, $B_2O_3$ 11.7 %, $TiO_2$ 4.6 %, F 0.8 % et ZnO 20.5 %.

Cent parts en poids de cette association de compositions sont alors ajoutées à 27 parts d'un médium à base d'huile de pin comportant 3 % en poids de résine acrylique, afin d'obtenir une composition d'émail prête à être déposée sur un substrat. La composition est ensuite déposée sur une feuille de verre puis cuite à 630-650°C environ pendant quelques minutes. On obtient un substrat revêtu d'une couche d'émail noir présentant une densité optique de 2,7 et les coordonnées colorimétriques suivantes : L* = 4 ; a* = 0,3 et b* = 0,5.

Le substrat est ensuite broyé et introduit dans un four de fusion de matières premières pour la réalisation de feuilles de verre par flottage, le substrat représentant 50 % en poids de la charge du four (et l'émail représentant 0.5 % en poids de ce substrat). La température du four est de l'ordre de 1500°C. On obtient un verre dénué de toute coloration sans infondus en sortie de four.

De même que précédemment, par rapport à une même composition recyclable à base uniquement de bismuth comme oxyde intermédiaire, la composition obtenue dans cet exemple est beaucoup plus économique.

EXEMPLE COMPARATIF 1

On mélange 35 parts d'une fritte comprenant (en poids) 11 % de $B_2O_3$, 65 % de $Bi_2O_3$, 17.4 % de $SiO_2$, 2.6 % de $Na_2O$ et 4 % d'$Al_2O_3$ et 35 parts d'une fritte de composition suivante : $SiO_2$ 45.2 %, $Al_2O_3$ 2.6 %, $Na_2O$ 14.6 %, $B_2O_3$ 11.7 %, $TiO_2$ 4.6 %, F 0.8 % et ZnO 20.5 %, puis on ajoute 30 parts en poids de $MnO_2$.

Cent parts en poids de cette association de compositions sont alors ajoutées à 27 parts d'un médium à base d'huile de pin comportant 3 % en poids de résine acrylique, afin d'obtenir une composition d'émail prête à être déposée sur un substrat. La composition est ensuite déposée sur une feuille de verre puis cuite à 650°C environ pendant quelques minutes. On obtient un substrat revêtu d'une couche d'émail marron présentant une densité optique de 1,4 et les coordonnées colorimétriques suivantes : L* = 17,7 ; a* = 3,0 et b* = 6,4 (ces coordonnées étant mesurées pour l'émail se trouvant sur un substrat en verre présentant un facteur de transmission lumineuse de l'ordre de 90 % et une épaisseur de 4 mm).

EXEMPLE COMPARATIF 2

On procède à une fusion directe de matières premières comme dans l'exemple 1 en remplaçant une partie des matières premières apportant le bismuth par des matières premières apportant du zinc de façon à obtenir un mélange proche de celui obtenu dans l'exemple 1 mais avec une partie du $Bi_2O_3$ remplacée par du ZnO, cette fusion étant suivie d'un broyage.

Cent parts en poids de ce mélange sont alors ajoutées à 27 parts d'un médium à base d'huile de pin comportant 3 % en poids de résine acrylique, afin d'obtenir une composition d'émail prête à être déposée sur un substrat. La composition est ensuite déposée sur une feuille de verre puis cuite à 650°C environ pendant quelques minutes. On obtient un substrat revêtu d'une couche d'émail marron, comme dans l'exemple comparatif précédent.

Les émaux selon l'invention peuvent notamment être utilisés pour revêtir des vitrages pour l'industrie automobile ou le bâtiment.

**Revendications**

1. Procédé de fabrication d'un émail noir recyclable, comprenant au moins du zinc, selon lequel on réalise la fusion, à des températures supérieures à 900°C, de matières premières vitrifiables comprenant au moins du bismuth, du silicium, du bore et du manganèse, puis on ajoute une fritte de verre comprenant au moins du zinc au mélange obtenu après cette fusion directe.

2. Procédé selon la revendication 1, **caractérisé en ce que** la fusion des matières premières est opérée à plus de 1050°C.

3. Procédé selon l'une des revendications 1 ou 2, **caractérisé en ce que** la fritte de verre au zinc est ajoutée au mélange de façon à représenter de l'ordre de 20 à 55 % en poids de l'association mélange/fritte de verre au zinc.

4. Procédé selon l'une des revendications 1 à 3, **caractérisé en ce que** l'on ajoute uniquement la fritte de verre comprenant au moins du zinc, en combinaison avec un médium ou non et sans pigments, au mélange.

5. Procédé selon l'une des revendications 1 à 4, **caractérisé en ce que** le mélange est broyé avant l'ajout de la fritte de verre au zinc.

6. Composition d'émail noir recyclable, comprenant au moins du zinc, cette composition étant susceptible d'être obtenue par le procédé selon l'une des revendications 1 à 5.

7. Composition d'émail comprenant une première composition obtenue par fusion, à des températures supérieures à 900°C, de matières premières vitrifiables comprenant au moins du bismuth, du silicium, du bore et du manganèse, cette composition d'émail comprenant également une seconde composition ajoutée à la première, sous forme d'au moins une fritte de verre comprenant au moins du zinc.

8. Composition d'émail selon la revendication 7, **caractérisée en ce qu'**elle comprend en outre un médium.

**9.** Composition selon l'une des revendications 6 à 8, **caractérisée en ce qu'**elle est dénuée de chrome, cuivre, nickel et cobalt.

**10.** Procédé d'émaillage d'un substrat en verre dans lequel on revêt au moins une partie d'un substrat en verre d'une composition d'émail telle que définie dans l'une des revendications 6 à 9, puis on soumet le substrat émaillé à un traitement thermique de façon à cuire l'émail.

**11.** Vitrage comprenant au moins une feuille de verre revêtue, sur au moins une partie d'au moins une de ses faces, d'au moins une couche d'un émail présentant une composition selon l'une des revendications 6 à 9.


**Claims**

**1.** Method of manufacturing a recyclable black enamel, comprising at least zinc, according to which the fusion is carried out, at temperatures above 900°C, of vitrifiable raw materials comprising at least bismuth, silicon, boron and manganese, and then a glass frit is added comprising at least zinc to the mixture obtained after this direct fusion.

**2.** Method according to Claim 1, **characterised in that** the fusion of the raw materials is carried out at more than 1050°C.

**3.** Method according to one of Claims 1 or 2, **characterised in that** the glass frit with zinc is added to the mixture so as to represent around 20% to 55% by weight of the association between mixture and glass frit with zinc.

**4.** Method according to one of Claims 1 to 3, **characterised in that** solely the glass frit comprising at least zinc, in combination with a medium or not and without pigments, is added to the mixture.

**5.** Method according to one of Claims 1 to 4, **characterised in that** the mixture is ground before the addition of the glass frit with zinc.

**6.** Recyclable black enamel composition, comprising at least zinc, this composition being able to be obtained by the method according to one of Claims 1 to 5.

**7.** Enamel composition comprising a first composition obtained by fusion, at temperatures above 900°C, of vitrifiable raw materials comprising at least bismuth, silicon, boron and manganese, this enamel composition also comprising a second composition added to the first, in the form of at least one glass frit comprising at least zinc.

**8.** Enamel composition according to Claim 7, **characterised in that** it also comprises a medium.

**9.** Composition according to one of Claims 6 to 8, **characterised in that** it contains no chromium, copper, nickel or cobalt.

**10.** Method of enamelling a glass substrate, in which at least part of a glass substrate is coated with an enamel composition as defined in one of Claims 6 to 9, and then the enamel substrate is subjected to a heat treatment so as to bake the enamel.

**11.** Glazing comprising at least one sheet of glass coated, on at least part of at least one of its faces, with at least one layer of an enamel having a composition according to one of Claims 6 to 9.


**Patentansprüche**

**1.** Verfahren zur Herstellung eines wenigstens Zink enthaltenden, recycelbaren schwarzen Emails, gemäß welchem das Schmelzen von Glasrohstoffen, die mindestens Wismut, Silicium, Bor und Mangan umfassen, bei einer Temperatur von über 900 °C durchgeführt und anschließend zu dem nach diesem direkten Schmelzvorgang erhaltenen Gemisch eine wenigstens Zink enthaltende Glasfritte zugegeben wird.

**2.** Verfahren nach Anspruch 1, **dadurch gekennzeichnet, dass** das Schmelzen der Glasrohstoffe bei über 1 050 °C durchgeführt wird.

**3.** Verfahren nach Anspruch 1 oder 2, **dadurch gekennzeichnet, dass** die zinkhaltige Glasfritte dem Gemisch derart zugesetzt wird, dass sie etwa 20 bis 55 Gew.-% der Summe aus Gemisch/zinkhaltiger Glasfritte ausmacht.

**4.** Verfahren nach einem der Ansprüche 1 bis 3, **dadurch gekennzeichnet, dass** ausschließlich die wenigstens Zink enthaltende Glasfritte, gegebenenfalls zusammen mit einem Mittel, und ohne Pigmente dem Gemisch zugesetzt wird.

**5.** Verfahren nach einem der Ansprüche 1 bis 4, **dadurch gekennzeichnet, dass** das Gemisch vor Zugabe der zinkhaltigen Glasfritte zermahlen wird.

**6.** Emailzusammensetzung, die schwarz und rezirkulierbar ist und wenigstens Zink enthält und durch das Verfahren nach einem der Ansprüche 1 bis 5 hergestellt werden kann.

**7.** Emailzusammensetzung, die eine erste Zusammensetzung, die durch Schmelzen von Glasrohstoffen, die mindestens Wismut, Silicium, Bor und Mangan umfassen, bei einer Temperatur von über 900 °C erhalten worden ist, und welche weiterhin eine zweite Zusammensetzung, die der ersten in Form von mindestens einer wenigstens Zink enthaltenden Glasfritte zugegeben wird, umfasst.

**8.** Emailzusammensetzung nach Anspruch 7, **dadurch gekennzeichnet, dass** sie außerdem ein Mittel enthält.

**9.** Zusammensetzung nach einem der Ansprüche 6 bis 8, **dadurch gekennzeichnet, dass** sie frei von Chrom, Kupfer, Nickel und Cobalt ist.

**10.** Verfahren zum Emaillieren eines Glassubstrats, in welchem wenigstens ein Teil eines Glassubstrats mit einer Emailzusammensetzung wie in einem der Ansprüche 6 bis 9 definiert beschichtet und anschließend das emaillierte Substrat derart einer Wärmebehandlung unterworfen wird, dass das Email einbrennt.

**11.** Glas, das mindestens eine Glasscheibe umfasst, die auf wenigstens einem Teil wenigstens einer Seite mit mindestens einer Schicht aus einem Email versehen ist, das eine Zusammensetzung nach einem der Ansprüche 6 bis 9 besitzt.